# FASCICULE DE BREVET EUROPEEN

(11) **EP 0 937 679 B1**
(45) Date de publication et mention de la délivrance du brevet: **24.03.2004**
(21) Numéro de dépôt: 99400405.9
(22) Date de dépôt: 19.02.1999
(51) Int. Cl.: C01B 3/02, C01B 31/18, C01B 3/50, F25J 3/02

(54) **Procédé et installation de production de monoxyde de carbone et d'hydrogène**
Verfahren und Vorrichtung für die Herstellung von Kohlenmonoxid und Wasserstoff
Process and apparatus for the production of carbon monoxide and hydrogen

(30) Priorité: 20.02.1998 FR 9802100
(43) Date de publication de la demande: 25.08.1999
(73) Titulaire: L'air Liquide, S.A. à Directoire et Conseil de Surveillance pour l'Etude et l'Exploitation des Procédés Georges Claude, 75321 Paris Cedex 07 (FR)
(72) Inventeur: Gallarda, Jean, 94340 Joinville le Pont (FR); Wegrzyn, Franck, 94210 La Varenne (FR)
(74) Mandataire: Le Moenner, Gabriel

(56) Documents cités:
- EP-A- 0 119 001
- EP-A- 0 307 983
- EP-A- 0 677 483
- DE-A- 3 814 293
- US-A- 4 805 414

## Description

La présente invention concerne la production de monoxyde de carbone.

Elle concerne également la production d'un mélange de synthèse (N₂ + 3H₂) utilisable pour la production d'ammoniac, à partir d'un mélange gazeux et d'azote.

L'invention concerne encore une installation permettant une telle production combinée, pouvant être intégrée en particulier dans un équipement de production d'ammoniac.

Dans la technique classique, du monoxyde de carbone est obtenu lors du réformage à la vapeur ou de l'oxydation partielle d'hydrocarbures. Du monoxyde de carbone de haute pureté peut être produit sur de telles unités en employant des méthodes de purification classiques. Celles-ci comprennent des procédés cryogéniques comme le lavage au méthane liquide ou la condensation partielle. Le lavage au méthane permet de produire du monoxyde de carbone de haute pureté avec comme sous produit de l'hydrogène impur, contenant typiquement 1 à 2 % de méthane.

Cette méthode de séparation permet d'obtenir de l'hydrogène sous pression et un très bon rendement en monoxyde de carbone (jusqu'à 99 %).

La condensation partielle permet également de produire du monoxyde de carbone de haute pureté, tel que décrit dans EP-A-0677483.

Toutefois, le rendement en monoxyde de carbone n'excède généralement pas 80 % du fait des pertes avec l'hydrogène produit.

Pour augmenter le rendement en monoxyde de carbone, il est connu dans la technique d'abaisser la température du pot de condensation par détente du flux d'hydrogène qui s'échappe en tête de pot. Une autre solution consiste à recycler l'hydrogène impur produit comme gaz d'alimentation de l'unité de condensation partielle.

Ces techniques sont néanmoins coûteuses tant du point de vue de l'énergie nécessaire que de l'investissement.

Pour produire de l'hydrogène de pureté convenable pour la production d'un mélange de synthèse d'ammoniac, on utilise classiquement la purification cryogénique par lavage à l'azote liquide, tel que décrit dans EP-A-0307983 et DE-A-3814293.

Par cette technique, de l'hydrogène pur peut être obtenu à partir du gaz de synthèse issu d'un procédé de réformage ou d'oxydation partielle d'hydrocarbures ou de charbon.

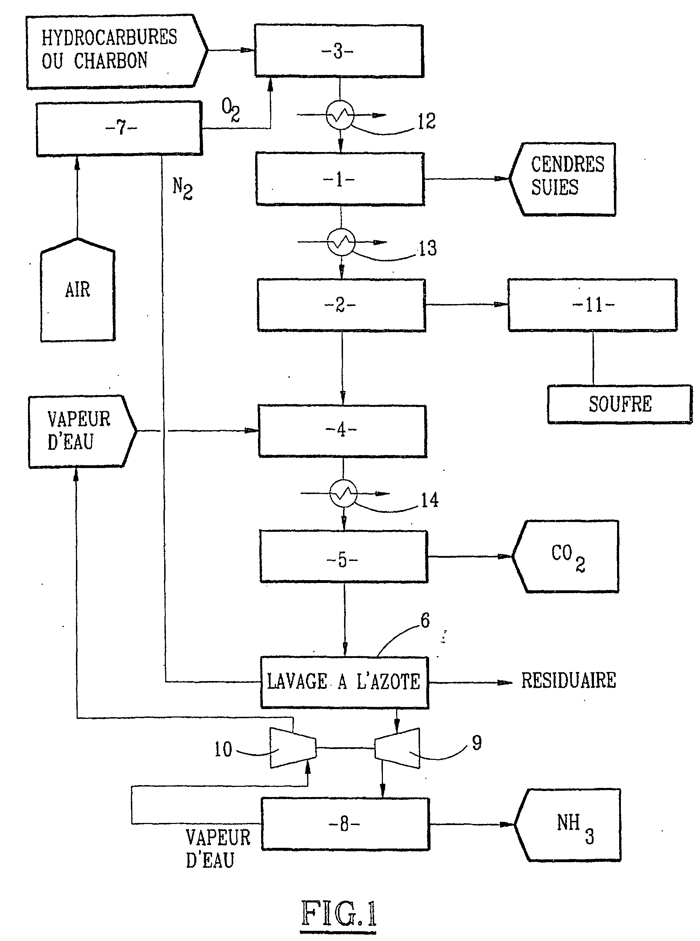

Un tel procédé est illustré sur la figure 1 et est décrit sommairement ci-dessous :

Après l'élimination des suies, en 1, et celle du sulfure d'hydrogène, en 2, du mélange issu de l'étape d'oxydation partielle d'hydrocarbures ou de charbon, en 3, l'étape 4 de conversion du CO transforme la majeure partie du CO présent, sous l'action de vapeur d'eau, en dioxyde de carbone (CO₂) en produisant de l'hydrogène. Après l'élimination de CO₂ par absorption, en 5, le mélange gazeux est soumis à une étape 6 de lavage à l'azote.

Le lavage à l'azote fournit en tête de colonne de l'hydrogène sous pression de haute pureté, convenable pour son utilisation dans la production d'un mélange de synthèse (N₂+3H₂), ainsi qu'un gaz résiduaire contenant essentiellement du monoxyde de carbone, de l'hydrogène, du méthane et de l'azote.

On a également représenté à la Figure 1 les autres opérations de la synthèse d'ammoniac : distillation d'air, en 7, fournissant l'oxygène nécessaire à l'oxydation partielle 3 et l'azote nécessaire pour le lavage 6 ; synthèse de NH₃ proprement dite en 8, à partir du mélange de synthèse issu de l'étape 6, comprimé en 9 ; détente de vapeur dans une turbine 10 pour entraîner le compresseur 9 ; traitement du sulfure d'hydrogène issu de l'étape 2, en 11, par un procédé Claus ; et divers échangeurs de chaleur 12 à 14.

Pour produire du monoxyde de carbone dans le cas particulier ci-dessus, il est connu dans la technique antérieure de traiter le résiduaire issu de l'étape de lavage à l'azote 6.

Le gaz résiduaire est alors utilisé comme mélange d'alimentation du procédé de production de monoxyde de carbone.

De tels procédés sont décrits notamment dans les documents EP-A-0 0092 770 et EP-A-0 676 373.

Pour la production de monoxyde de carbone en valorisant l'hydrogène sous-produit, c'est-à-dire en produisant parallèlement de l'hydrogène sous pression de pureté satisfaisante pour la préparation d'un mélange de synthèse, on a proposé dans la technique antérieure d'associer à l'étape de lavage au méthane liquide permettant d'obtenir du monoxyde de carbone de pureté élevée, une étape subséquente de lavage à l'azote liquide permettant de purifier l'hydrogène destiné à la production du mélange de synthèse (N₂ + 3H₂).

L'objectif de la présente invention est de produire d'une part, du monoxyde de carbone de pureté élevée convenable pour d'autres productions et d'autre part, de produire de l'hydrogène sous pression de pureté élevée convenable pour son utilisation pour la production d'un mélange de synthèse d'ammoniac.

Un autre objectif de la présente invention est de produire du monoxyde de carbone à partir d'un mélange gazeux d'alimentation contenant essentiellement du monoxyde de carbone et de l'hydrogène ainsi que d'autres constituants dont le méthane, en valorisant l'hydrogène disponible en tant que sous-produit de cette production de monoxyde de carbone.

L'invention a encore pour objectif de fournir un procédé permettant de telles productions avec une consommation en énergie et un coût d'investissement réduits.

Elle a encore pour objectif de fournir une installation permettant une telle production combinée.

A cet effet, la présente invention a pour objet un procédé selon la revendication 1.

Selon l'invention, les opérations de condensation partielle et de lavage à l'azote sont réalisées dans une même installation.

De préférence, l'hydrogène est envoyé à la colonne de lavage sans être chauffé.

L'invention a encore pour objet une installation selon le revendication 11.

Les inventeurs ont mis en évidence que l'on pouvait produire parallèlement du monoxyde de carbone de pureté convenable à son utilisation dans d'autres productions, avec un rendement élevé, et de l'hydrogène de pureté convenable pour son utilisation dans la production d'un mélange de synthèse d'ammoniac, par valorisation de l'hydrogène impur issu d'une étape de condensation partielle produisant le monoxyde de carbone directement à partir du mélange d'alimentation.

Ils ont ainsi mis en évidence que l'on pouvait réaliser une telle valorisation en effectuant une première séparation du monoxyde de carbone par condensation partielle suivie d'une opération de lavage à l'azote, à coût réduit.

Un exemple de réalisation de l'invention va maintenant être décrit en référence aux figures annexées dans lesquelles
- la figure 1 schématise la production classique d'un mélange de synthèse d'ammoniac lorsque l'hydrogène est obtenu par oxydation partielle d'hydrocarbures ou de charbon ;
- la figure 2 schématise un procédé selon lequel les opérations de condensation partielle et de lavage à l'azote liquide sont réalisées dans deux installations successives ;
- les figures 3 et 4 schématisent respectivement des installations pour la condensation partielle et le lavage à l'azote du procédé de la figure 2 ;
- la figure 5 est une variante de réalisation de la figure 4 ;
- la figure 6 est une variante de réalisation de la figure 3 ;
- la figure 7 schématise un mode de réalisaticn de l'invention selon lequel les opérations de condensation partielle et de lavage à l'azote liquide sont réalisées dans une même installation ;
- la figure 8 schématise une installation pour la mise en oeuvre du procédé de la figure 7 ;
- la figure 9 est une variante de la figure 8.

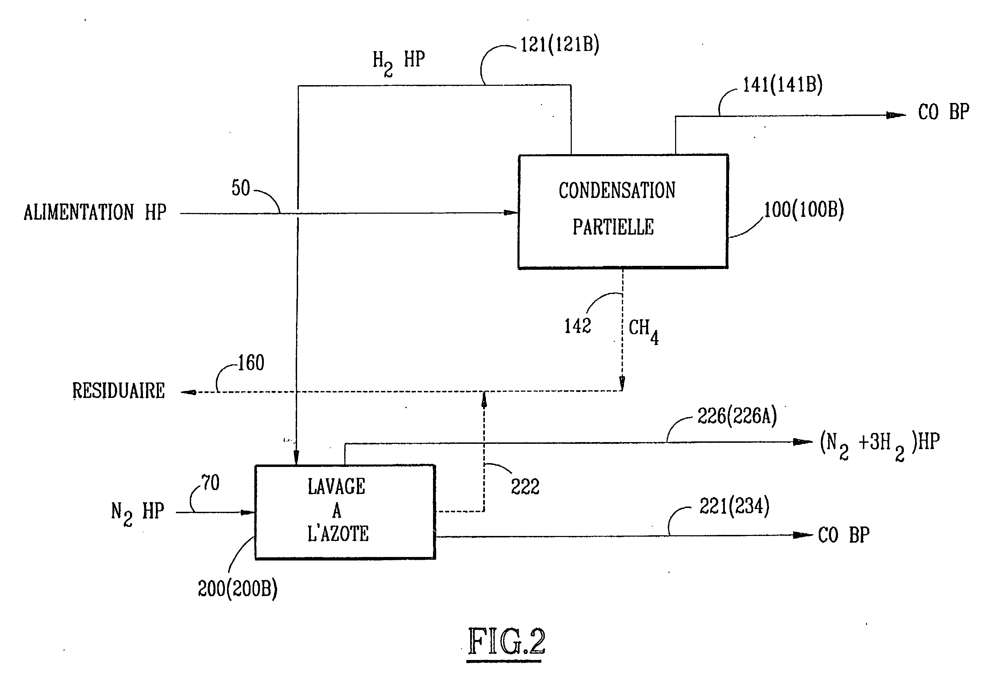

On décrit tout d'abord un procédé en référence aux figures 2 à 6.

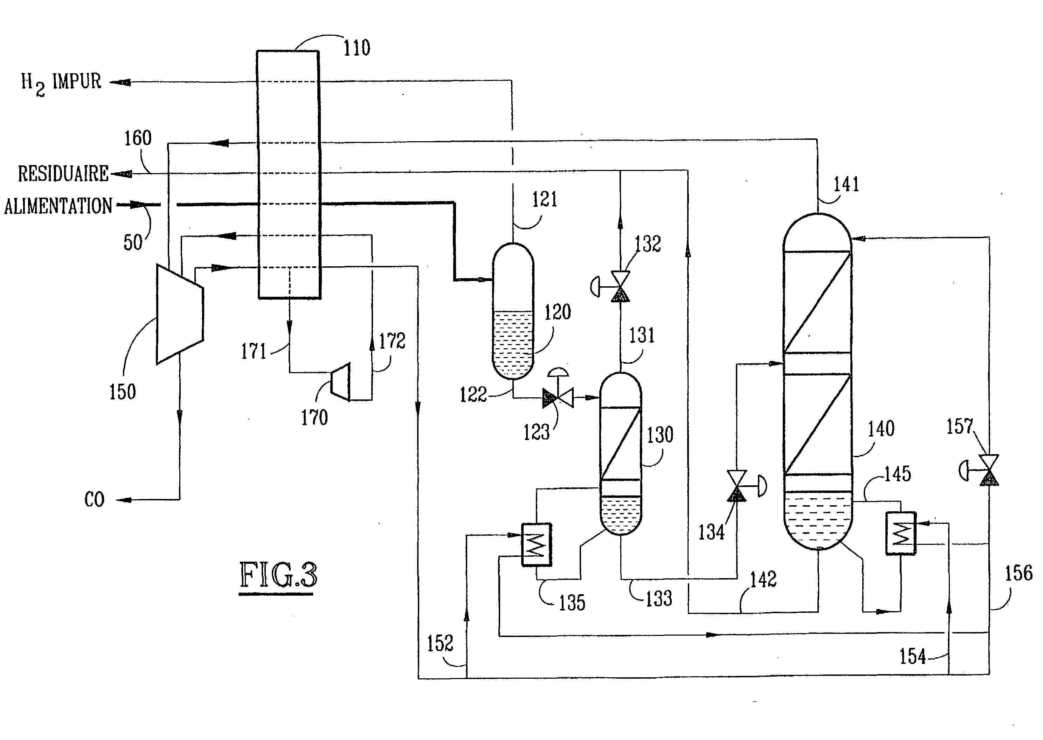

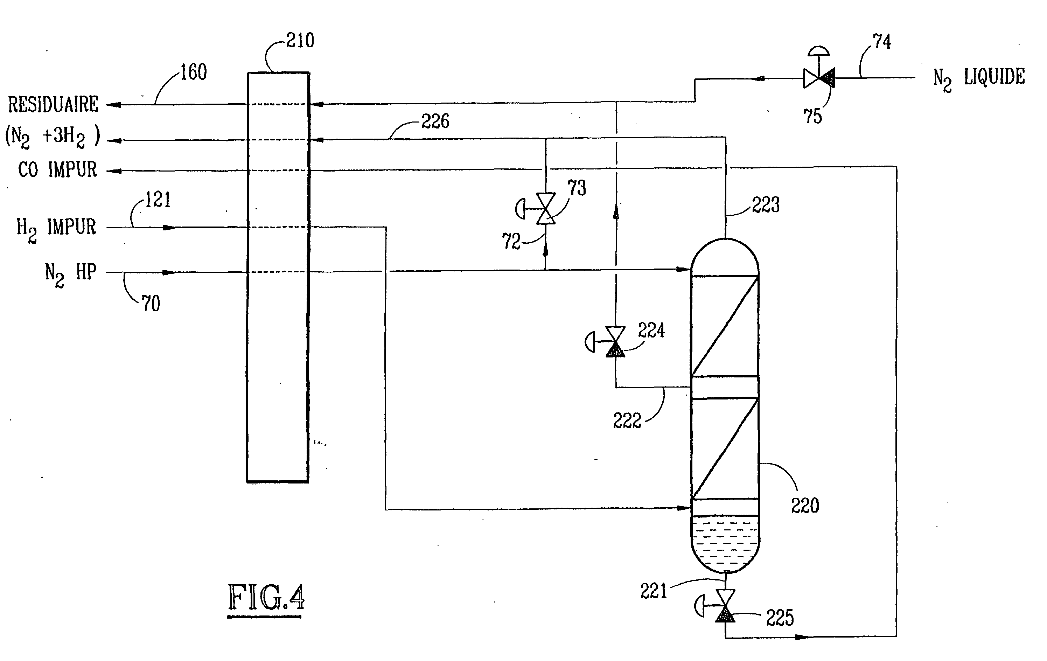

Les installations représentées aux figures 3 et 4 remplacent le bloc 6 de la figure 1. Elles correspondent respectivement aux blocs 100 et 200 de la figure 2 et constituent deux boites froides successives.

L'installation 100 schématisée à la figure 3 est destinée à la production de monoxyde de carbone à partir d'un mélange gazeux d'alimentation 50 constitué essentiellement d'hydrogène , de monoxyde de carbone et d'autres constituants dont le méthane.

La composition du mélange d'alimentation 50 peut varier selon le typé de procédé de génération de gaz de synthèse d'ammoniac mis en oeuvre (réformage à la vapeur, oxydation partielle, etc.).

A la sortie du bloc 5 de la figure 1, le mélange d'alimentation est disponible à une pression compris entre 10 bars et 100 bars et à la température ambiante ou à une température inférieure.

L'installation 100 comprend essentiellement un échangeur de chaleur 110 du type indirect à contre-courant, un pot séparateur 120, une colonne d'épuisement 130 équipée d'un rebouilleur de cuve 135 et une colonne de distillation 140 équipée d'un rebouilleur de cuve 145, ainsi qu'une turbine de détente 170.

L'installation 100 fonctionne selon le principe classique de la condensation partielle qui est donné ci-après :

Le mélange gazeux d'alimentation 50 est refroidi dans l'échangeur de chaleur 110 à la température la plus basse possible, la limite étant définie par :
- la pression de vaporisation de CO liquide la plus basse qu'on puisse atteindre dans le cas d'une production d'hydrogène impur sous pression ; c'est le schéma décrit ci-après
- la température de solidification du monoxyde de carbone si l'on atteint des températures plus basses par détente d'hydrogène impur.

La condensation partielle de ce mélange à travers l'échangeur de chaleur 110 permet de séparer dans le pot séparateur 120 de l'hydrogène impur 121.

L'hydrogène impur 121 contient typiquement 2 à 10 % de monoxyde de carbone.

La fraction liquide 122 condensée dans le pot 120 recueillie en cuve, contient essentiellement du monoxyde de carbone et du méthane ainsi que de l'hydrogène résiduel, dissous.

L'hydrogène dissous est séparé après détente à moyenne pression (typiquement 7 à 15 bars) de la fraction liquide 122 dans une vanne de détente 123, dans la colonne d'épuisement 130.

L'hydrogène séparé est recueilli en tête de la colonne 130 dans le flux 131 qui, après détente à basse pression dans une vanne de détente 132, est réchauffé et dirigé vers un réseau résiduaire 160.

La fraction liquide 133 recueillie en cuve de la colonne 130 est riche en monoxyde de carbone et contient également du méthane.

Ce dernier est alors séparé par introduction en un emplacement intermédiaire de la colonne de distillation 140, après détente à basse pression (typiquement 1 à 5 bars) du flux 133 dans une vanne de détente 134.

Le monoxyde de carbone est produit à la basse pression en tête de la colonne 140 dans le flux 141.

Le méthane est séparé et recueilli en cuve de la colonne 140 dans le flux 142 et est dirigé vers le réseau résiduaire 160.

Les besoins en froid sont assurés par un cycle frigorifique CO ouvert comme décrit ci-dessous :

Le monoxyde de carbone produit sous basse pression dans le flux 141 et réchauffé en 110, est comprimé à l'aide d'un compresseur de cycle 150 et refroidi dans l'échangeur de chaleur 110.

Une partie de ce monoxyde de carbone, prélevée dans les flux 152 et 154, est condensée dans les rebouilleurs de cuve 135 et 145 des colonnes 130 et 140 respectivement.

Le flux de monoxyde de carbone 156 est par ailleurs détendu dans une vanne de détente 157 et vaporisé en basse pression en tête de la colonne de distillation 140.

Pour assurer le bilan frigorifique de l'installation 100, un courant de monoxyde de carbone haute pression 171 partiellement refroidi dans l'échangeur de chaleur 110, est détendu dans une turbine 170 puis réchauffé dans l'échangeur de chaleur 110 avant d'être recomprimé au moyen du compresseur de cycle 150.

Le cycle frigorifique peut être assuré par tout autre fluide disponible ou encore par vaporisation d'un fluide cryogénique.

Si l'on se réfère à la figure 2, on voit que l'installation 100 produit du monoxyde de carbone à la basse pression dans le flux 141, lequel peut être utilisé comme fluide de cycle comme indiqué ci-dessus ou dirigé vers d'autres productions.

Une fraction d'hydrogène impur sous la haute pression est produite dans le flux 121 et contient essentiellement du monoxyde de carbone (typiquement 2 à 10 %) et notamment du méthane (typlquement moins de 1 %).

La fraction 121 est la source directe de la production associée d'hydrogène de pureté convenable pour son utilisation dans la production d'un mélange de synthèse d'ammoniac.

A cette fin, le flux d'hydrogène impur 121 issu du pot séparateur 120 de l'installation 100, est purifié dans une seconde installation 200 comme indiqué sur la figure 2.

L'installation 200, qui est schématisée à la figure 4, est ainsi destinée à la production d'un mélange de synthèse d'ammoniac (N₂ + 3H₂) et permet parallèlement, de produire un second flux de monoxyde de carbone à partir du mélange d'alimentation 121 constitué essentiellement d'hydrogène et pouvant contenir jusqu'à 10 % de monoxyde de carbone ainsi que du méthane résiduel comme indiqué précédemment.

L'installation 200 comprend essentiellement un échangeur de chaleur 210 du type indirect à contre-courant, une source adaptée à fournir un courant d'azote haute pression et une colonne de lavage à l'azote liquide 220 équipée notamment de moyens de soutirage à un emplacement intermédiaire de ladite colonne de lavage.

L'installation 200 fonctionne de la façon suivante :

Le mélange d'hydrogène impur 121 constituant le mélange d'alimentation à la haute pression (typiquement 10 à 100 bars), est refroidi dans l'échangeur de chaleur 210 à une température de l'ordre de -180°C puis est lavé de ses impuretés (essentiellement CO et CH₄) dans la colonne de lavage à l'azote 220.

L'hydrogène impur refroidi est ainsi amené en cuve de la colonne de lavage 220, à l'entrée de laquelle les impuretés sont partiellement condensées.

Il est séparé dans la colonne 220 en une fraction liquide 221 recueillie en cuve de la colonne et en une fraction gazeuse.

La fraction gazeuse, essentiellement constituée d'hydrogène, est lavée par de l'azote 70 envoyé en tête de colonne à la haute pression, après avoir été préalablement refroidi et liquéfié dans l'échangeur de chaleur 210, et quitte celle-ci en tête dans le flux 223 constitué essentiellement d'hydrogène et ne contenant plus que quelques ppm (parties par million) de monoxyde de carbone et de méthane.

La fraction d'hydrogène 223 présente une pureté qui est compatible avec son utilisation dans la production d'un mélange de synthèse d'ammoniac. Elle est constituée d'environ 90 % d'hydrogène et de 10 % d'azote.

Elle est additionnée d'un appoint d'azote 72 prélevé sur le courant d'azote 70, via une vanne 73, pour former le mélange de synthèse d'ammoniac 226 et est finalement réchauffée à la température ambiante dans l'échangeur de chaleur 210.

Par ailleurs, une fraction liquide 222 est soutirée à un emplacement intermédiaire de la colonne 220. Cette fraction est riche en azote et relativement pauvre en monoxyde de carbone. Elle contient typiquement 75 % d'azote, 20 % de monoxyde de carbone et 5 % de méthane.

La fraction 222 est détendue à une basse pression (typiquement 1 à 5 bars) dans une vanne de détente 224, puis vaporisée et réchauffée à température ambiante dans l'échangeur de chaleur 210 pour être dirigée vers le réseau résiduaire 160 (" fuel gas ").

La fraction 221 soutirée en cuve de la colonne de lavage 220 est riche en monoxyde de carbone et pauvre en azote. Elle contient typiquement 92 % de monoxyde de carbone, 6 % d'hydrogène, 2 % de m éthane et 1 % d'azote.

Cette fraction 221 est, après détente dans la vanne de détente 225, avantageusement sortie à la pression la plus haute possible compatible avec le bilan frigorifique de l'installation 200.

Ce bilan frigorifique peut être assuré par un apport en azote liquide 74, détendu à la basse pression dans la vanne de détente 75 ou par tout autre moyen.

Si l'on se réfère à la figure 2, on voit que le lavage à l'azote conduit à la production d'un mélange de synthèse d'ammoniac 226 et à une fraction 221 qui est la source d'une seconde production associée de monoxyde de carbone.

Les deux flux de monoxyde de carbone produits peuvent être combinés ou non selon leurs destinations respectives.

Selon l'utilisation envisagée pour ce flux de monoxyde de carbone 221, celui-ci peut être purifié comme décrit ci-dessous, après détente dans la vanne de détente 225.

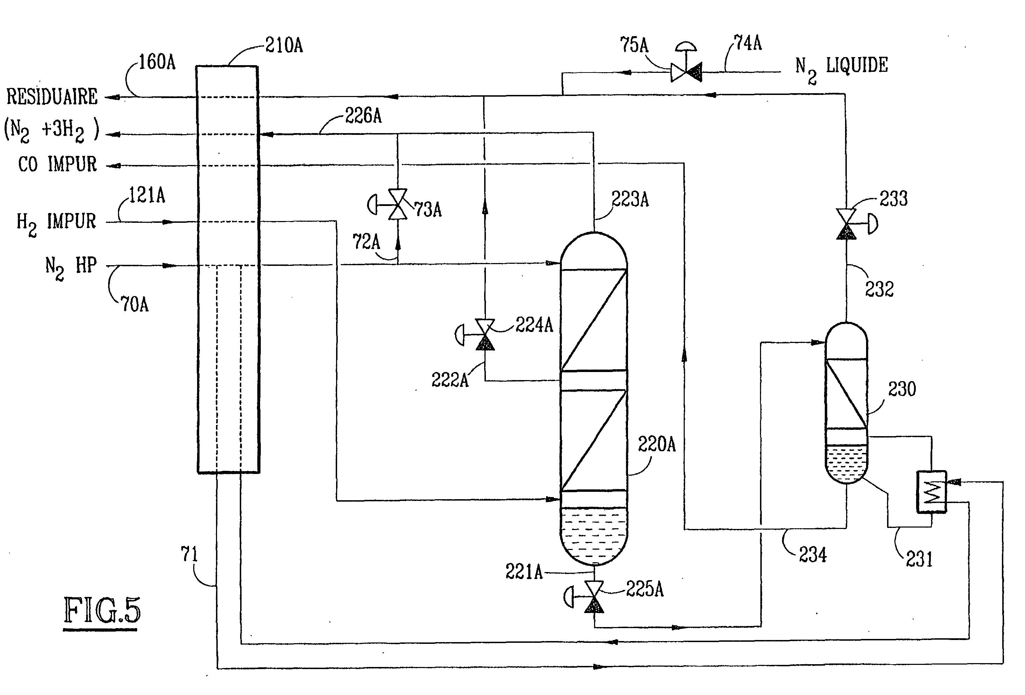

L'élimination de l'hydrogène résiduel est schématisée à la figure 5. Cette purification peut être réalisée dans la même boîte froide constituant l'installation 200 comme indiqué ci-dessous.

Pour la variante A de la figure 5, selon laquelle on effectue une élimination complémentaire de l'hydrogène du flux issu en cuve de la colonne de lavage à l'azote, les références de la figure 4 sont reprises avec l'indice supplémentaire A pour désigner les éléments communs à ces deux variantes de réalisation.

L'installation 200A comprend ainsi, outre l'échangeur de chaleur 210A, la colonne de lavage à l'azote 220A et la source adaptée à fournir un courant d'azote haute pression 70A, une colonne d'épuisement 230 équipée d'un rebouilleur de cuve 231.

Elle fonctionne de la manière suivante :

Le flux d'hydrogène impur 121A, contenant essentiellement de l'hydrogène, du monoxyde de carbone (jusqu'à 10 %) et du méthane résiduel, est lavé de ses impuretés dans la colonne de lavage 220A comme décrit précédemment.

L'hydrogène purifié est produit dans le flux 223A puis additionné d'un appoint d'azote 72A pour fournir un mélange de synthèse d'ammoniac 226A.

Un soutirage intermédiaire 222A permet d'éliminer la plus grande partie de l'azote.

Une fraction riche en monoxyde de carbone 221A est recueillie en cuve.

Elle est débarrassée de l'hydrogène qui y est dissous, par séparation dans la colonne d'épuisement 230 après détente à l'aide d'une vanne de détente 225A à une moyenne pression (typiquement 5 à 15 bars) intermédiaire entre la pression de la colonne 220A et celle du réseau résiduaire 160A.

L'hydrogène séparé est recueilli en tête de la colonne 230 dans le flux 232 qui, après détente à la basse pression dans une vanne de détente 233, est réchauffé dans l'échangeur de chaleur 210A et dirigé vers le réseau résiduaire 160A.

Une fraction liquide 234 constituée essentiellement de monoxyde de carbone et contenant également l'azote résiduel et les autres constituants présents initialement dans le mélange d'alimentation 121A dont le méthane, est recueillie en cuve de la colonne 230.

Le chauffage de la colonne d'épuisement 230 est assuré par une partie 71 de l'azote à haute pression 70A, après refroidissement partiel dans l'échangeur de chaleur 210A.

Le bilan frigorifique peut être assuré par un apport en azote liquide 74 A détendu à la basse pression dans la vanne de détente 75A ou par tout autre moyen comme décrit en référence à la figure 4.

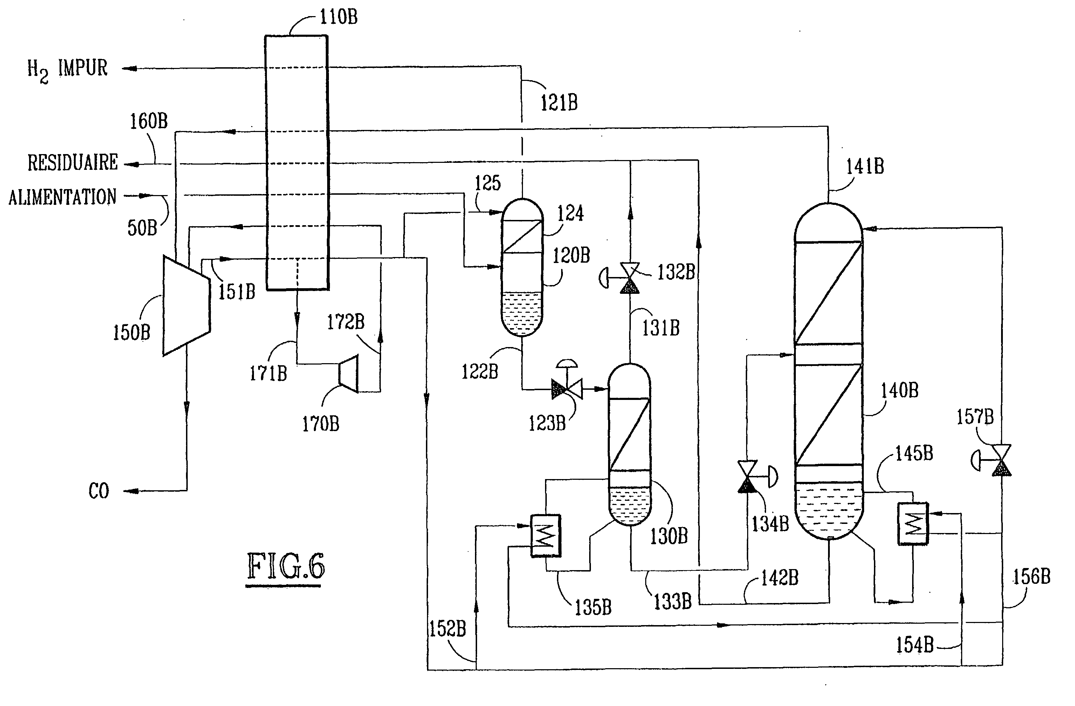

Si on souhaite que le CO produit par le lavage à l'azote ne contienne pratiquement pas de méthane, on peut éliminer le méthane du flux d'hydrogène impur issu de la condensation partielle, dans l'installation 100B de la figure 6.

Pour cette variante B schématisée à la figure 6, les références de la figure 3 sont reprises avec l'indice supplémentaire B pour désigner les éléments communs à ces deux variantes de réalisation.

L'installation 100B comprend un pot séparateur 120B muni de plateaux ou d'un garnissage 124. Elle comprend également, d'une manière analogue à l'installation 100, un échangeur de chaleur 110B, une colonne d'épuisement 130B équipée d'un rebouilleur de cuve 135B et une colonne de distillation 140B équipée d'un rebouilleur de cuve 145B, ainsi qu'une turbine de détente 170B

L'installation 100B fonctionne comme indiqué ci-après :

Le mélange gazeux d'alimentation 50B est refroidi dans l'échangeur de chaleur 110B et amené sous haute pression au pot séparateur 120B.

La condensation partielle de ce mélange dans l'échangeur 110B permet de séparer dans le pot séparateur 120B, de l'hydrogène impur 121B.

On effectue parallèlement dans le pot 120B, un lavage au monoxyde de carbone en envoyant en tête, un flux 125 de monoxyde de carbone prélevé dans le flux 151B de monoxyde de carbone produit en tête de la colonne 140B après recompression à l'aide du compresseur de cycle 150B.

L'hydrogène impur 121B recueilli en tête contient typiquement 10 % de CO et est débarrassé du méthane présent initialement dans le mélange d'alimentation 50B.

La fraction liquide 122B recueillie en cuve contient essentiellement du monoxyde de carbone ainsi que de l'hydrogène dissous.

Cet hydrogène dissous est séparé, après détente de la fraction 122B à la moyenne pression dans une vanne de détente 123B, dans la colonne d'épuisement 130B comme décrit en référence à la figure 3.

L'hydrogène est recueilli en tête de la colonne 130B dans le flux 131 B et est dirigé, après détente dans une vanne de détente 132B, vers le réseau résiduaire 160B.

L'hydrogène 121B ne contient pratiquement plus de méthane contrairement à la fraction 121 de la figure 3.

Le méthane résiduel peut être séparé dans la colonne de distillation 140B. Il est recueilli en cuve dans le flux 142B et est dirigé vers le réseau résiduaire 160B.

Les rebouilleurs de cuve 135B et 145B sont alimentés par du monoxyde de carbone produit 141B, respectivement par les flux 152B et 154B, après recompression à l'aide du compresseur 150B.

A l'issue de cette installation, le flux d'hydrogène produit 121B est traité dans une installation 200 telle que décrite ci-dessus.

Les principaux. flux produits selon les variantes A et B précitées sont indiqués entre parenthèses à la figure 2.

Le monoxyde de carbone produit contient de l'azote qui soit était présent dans le mélange gazeux d'alimentation soit résulte du lavage à l'azote liquide.

En fonction de l'intérêt économique, cet azote résiduel peut être éliminé à l'aide d'une colonne de séparation cryogénique supplémentaire (non représentée) comme cela est bien connu dans la technique.

Selon un mode de réalisation de l'invention, les opérations de condensation partielle et de lavage à l'azote sent intégrées dans une même boîte froide.

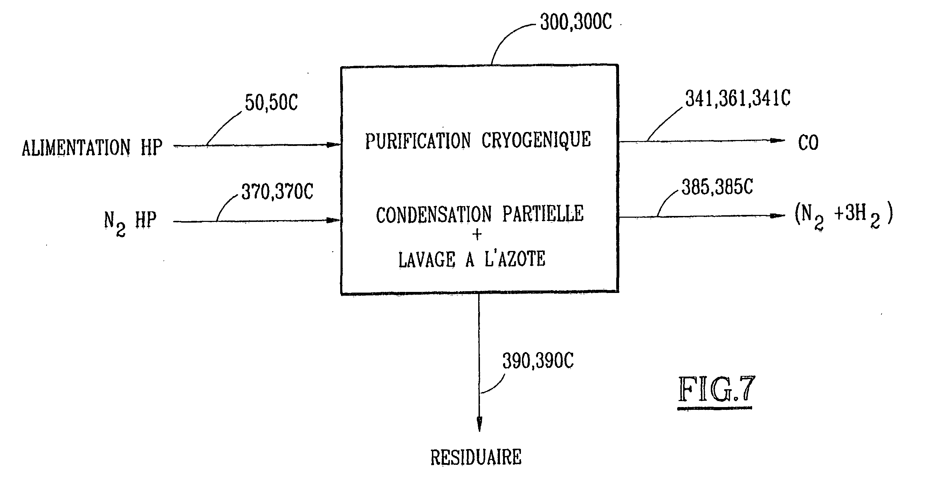

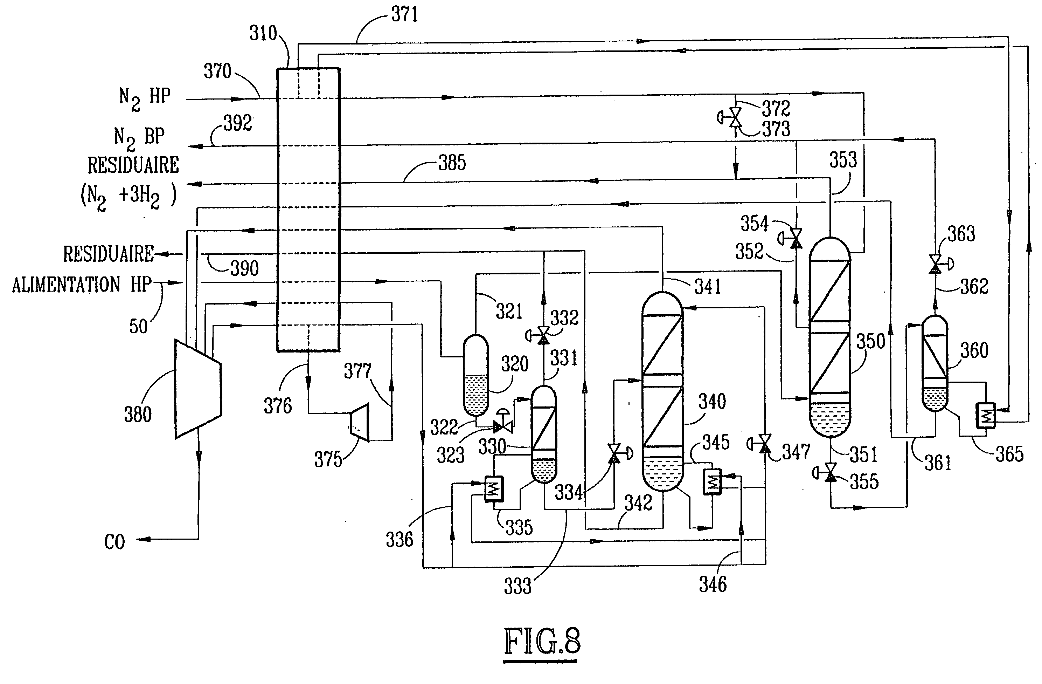

Comme illustré à la figure 7, ces deux opérations sont réalisées à l'aide de l'installation 300 schématisée à la figure 8.

Si l'on se réfère au procédé classique de production d'un mélange de synthèse d'ammoniac tel qu'illustré à la figure 1, l'installation 300 remplace le bloc 6.

L'installation 300 comprend essentiellement un échangeur de chaleur 310 du type indirect à contre-courant, un pot séparateur 320 éventuellement équipé de plateaux ou de garnissages (non représentés) pour l'élimination du méthane comme décrit précédemment, une première colonne d'épuisement 330 munie d'un rebouilleur de cuve 335, une colonne de distillation 340, munie d'un rebouilleur de cuve 345, une colonne de lavage à l'azote liquide 350 et une deuxième colonne d'épuisement 360 munie d'un rebouilleur de cuve 365 ainsi qu'une source adaptée à fournir un courant d'azote haute pression 370, une turbine de détente 375 et un compresseur de cycle 380.

L'installation 300 fonctionne comme décrit ci-après :

Le fonctionnement du pot séparateur 320, de la colonne d'épuisement 330 et de la colonne de distillation 340 est analogue à celui décrit en référence à l'installation de la figure 3. Le fonctionnement de la colonne de lavage à l'azote 350, de la colonne d'épuisement 360 est analogue à celui décrit pour l'installation de la figure 5.

Le mélange gazeux d'alimentation 50 est partiellement condensé par passage à travers l'échangeur de chaleur 310 et séparé dans le pot séparateur 320 produisant en tête un flux d'hydrogène impur 321, contenant essentiellement du monoxyde de carbone (environ 10 %) et d'autres constituants dont le méthane, et en cuve, un flux riche en monoxyde de carbone 322 contenant également du méthane et de l'hydrogène dissous.

Le mélange d'alimentation 50 peut être le cas échéant débarrassé de son méthane comme décrit en référence à la figure 6.

Le flux 322 de la cuve du pot 320 est traité après détente à moyenne pression dans une vanne de détente 323, dans la première colonne d'épuisement 330 où il est débarrassé de son hydrogène dissous, qui s'échappe en tête dans le flux 331.

Celui-ci est détendu dans la vanne de détente 332 avant d'être chauffé dans l'échangeur 310 dirigé vers un réseau résiduaire 390.

La fraction recueillie en cuve 333 est amenée, après détente à basse pression dans la vanne de détente 334, à un point intermédiaire de la colonne de distillation sous basse pression 340.

Une fraction riche en monoxyde de carbone 341 est recueillie en tête de la colonne 340 et le méthane est éliminé en cuve dans la fraction 342 et dirigé vers le réseau résiduaire 390 après avoir été mélangé avec le flux 331.

La fraction 321 d'hydrogène impur issue du pot séparateur 320 est directement amenée en cuve de la colonne de lavage à l'azote 350, dans la même boîte froide sans être chauffée. C'est là la différence essentielle de ce mode de réalisation par rapport au procédé de la figure 2.

Il résulte de ce lavage une fraction 353 d'hydrogène purifiée recueillie en tête, à laquelle est additionné un appoint d'azote 372 pour produire un mélange de synthèse d'ammoniac 385. Le mélange est chauffé dans l'échangeur 310.

La fraction liquide recueillie en cuve 351 est riche en monoxyde de carbone et contient de l'hydrogène résiduel ainsi que d'autres constituants dont le méthane et l'azote.

Un soutirage intermédiaire 352 est prévu comme dans le premier mode de réalisation (figures 4 et 5) pour éliminer la plus grande partie de l'azote et former de l'azote résiduaire 392.

La fraction 351 est ensuite débarrassée de l'hydrogène qu'elle contient dans la deuxième colonne d'épuisement 360, après détente dans une vanne de détente 355.

L'hydrogène est recueilli dans le flux 362 puis détendu dans une vanne de détente 363 avant d'être dirigé vers un réseau résiduaire basse pression 392.

La puissance de séparation est assurée au moyen d'un cycle CO alimenté par le monoxyde de carbone produit en 341 et 361 et chauffé en 310, recomprimé à l'aide du compresseur 380. Un débit de monoxyde de carbone pressurisé par le compresseur constitue un produit final.

Des frigories sont produites on refroidissant partiellement du CO comprimé dans l'échangeur 310 et en détendant le débit 376 dans une turbine 375. Le débit détendu 377 est réchauffé dans l'échangeur 310 et recyclé au compresseur 380.

Les rebouilleurs de cuve 335 et 345 sont alimentés par une partie 336, 346 respectivement du monoxyde de carbone de cycle.

Les rebouilleurs peuvent être alimentés par d'autres calorigènes (gaz de synthèse par exemple) disponibles au niveau de température requis.

Le rebouilleur de cuve 365 pour la colonne 360 est, quant à lui, alimenté par une partie 371 du courant d'azote haute pression, partiellement refroidie dans l'échangeur 310.

Ce mode de réalisation "intégré " permet de mieux combiner les frigorigènes et calorigènes et donc de réduire les irréversibilités d'échange thermique. Cette optimisation des échanges thermiques entre fluides permet de réduire sensiblement la consommation totale d'énergie. Ce mode de réalisation permet également de réduire le coût d'investissement.

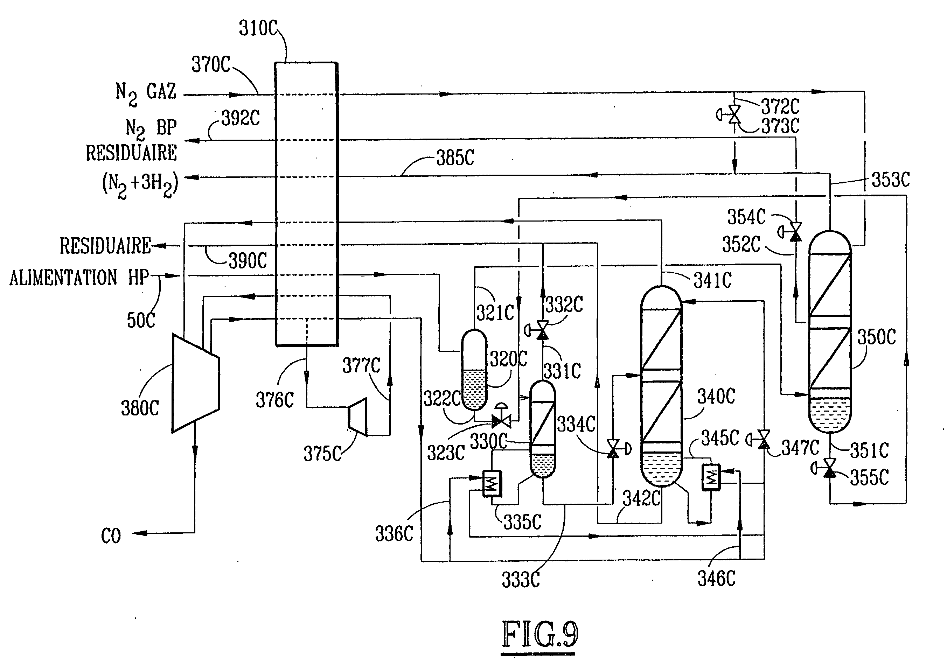

Selon une variante C de ce mode de réalisation de l'invention schématisée à la figure 9, l'installation 300C est analogue à l'installation 300 de la figure 8 mais ne comprend qu'une seule colonne d'épuisement 330C pour la séparation de l'hydrogène dissous, au lieu des colonnes 330 et 360 précédemment prévues.

Les éléments communs des installions des figures 8 et 9 portent les mêmes références avec un indice C complémentaire.

L'installation 300C comprend en outre une conduite d'amenée de la fraction liquide de cuve 351C, en tête de la colonne d'épuisement 330C, après détente dans une vanne de détente 355C.

L'installation 300C fonctionne d'une manière analogue à celle de la figure 8.

La seule différence réside dans le fait que la fraction liquide 351C recueillie en cuve de la colonne de lavage 350C, qui est riche en monoxyde de carbone et contient également de l'azote et de l'hydrogène dissous, est mélangée avec le flux 322C récupéré en cuve du pot 320C, préalablement détendu à la moyenne pression dans la vanne de détente 323C, puis débarrassée de son hydrogène dissous dans la colonne d'épuisement 330C.

De ce fait, la source d'azote 371 utilisée pour alimenter le rebouilleur de cuve 365 de la colonne d'épuisement 360 de l'installation de la figure 8, est supprimée.

Cette variante permet de réduire encore le coût d'investissement et la consommation d'énergie.

A titre comparatif, les performances du procédé selon l'invention ont été évaluées dans le cas 1 d'une condensation partielle et d'un lavage à l'azote successifs et dans le cas 2 où ces opérations sont intégrées dans une même installation, par rapport au cas 3 du procédé connu dans la technique qui consiste à réaliser d'abord un lavage au méthane liquide suivi d'un lavage à l'azote.

Le gaz d'alimentation 50 est un mélange issu d'un procédé de réformage présentant un rapport H₂/CO voisin de 3 et disponible sous une pression de 20 bars.

Le monoxyde de carbone est produit avec une pureté minimale de 98,5 % et contient moins de 0,1 % d'hydrogène. Il est disponible sous une pression dé 35 bars et le rendement d'extraction est de 97,5 %.

Un mélange de synthèse d'ammoniac est produit parallèlement sous une pression de 18 bars et contient moins de 10 ppm d'impuretés totales,

Du point de vue de la consommation en énergie, les bilans matières sont indiqués dans les tableaux 1 à 3 ci-dessous :

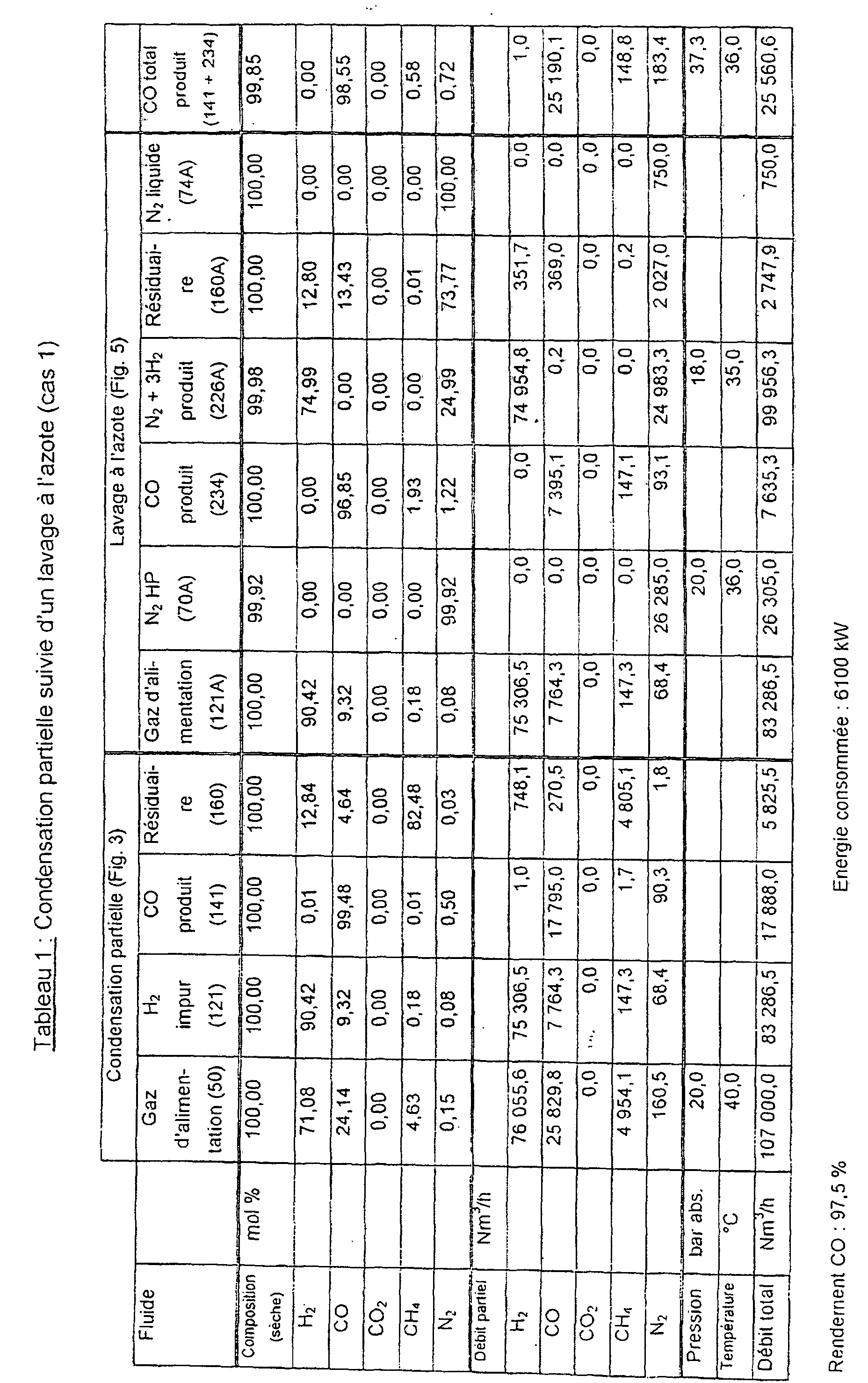

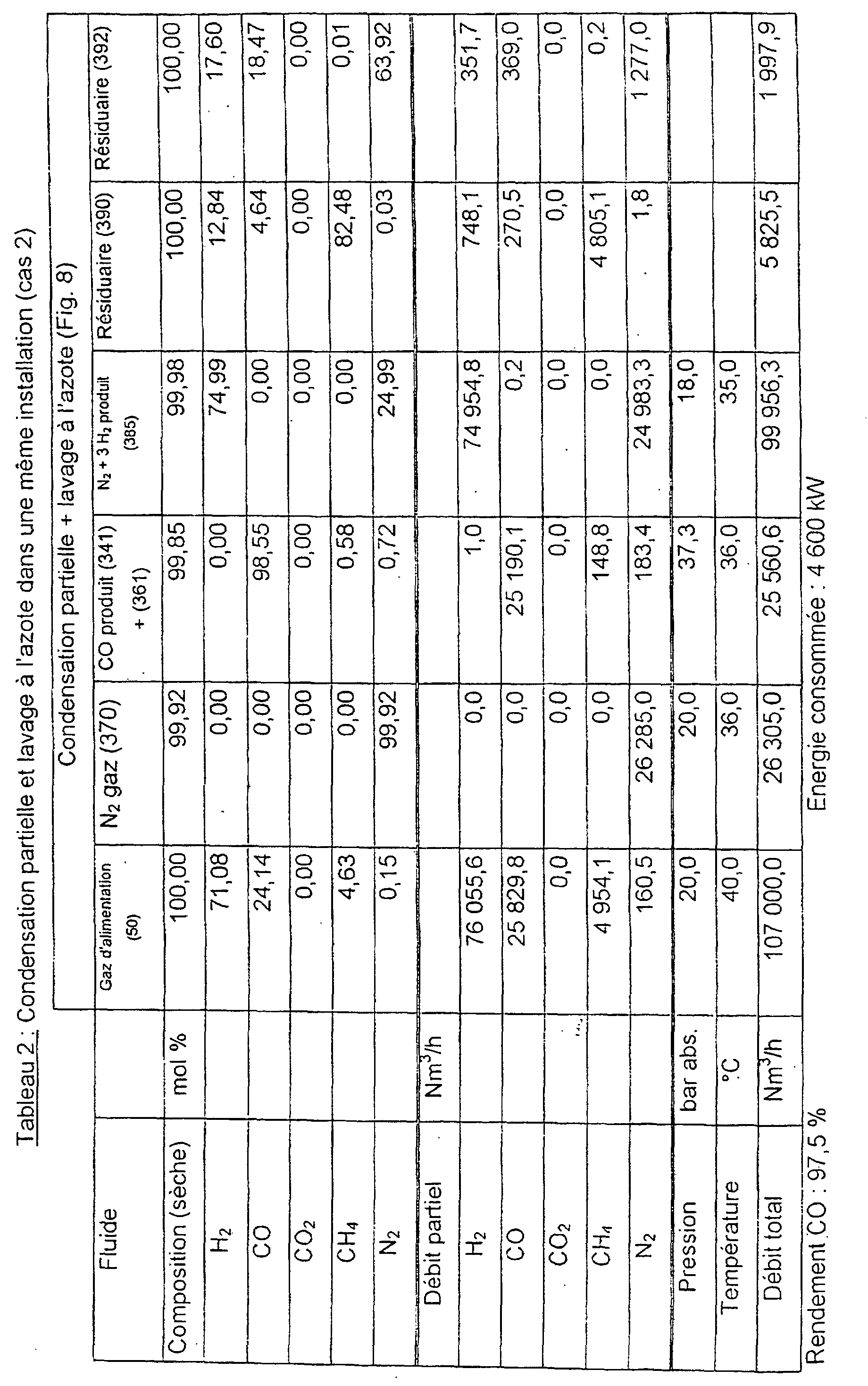

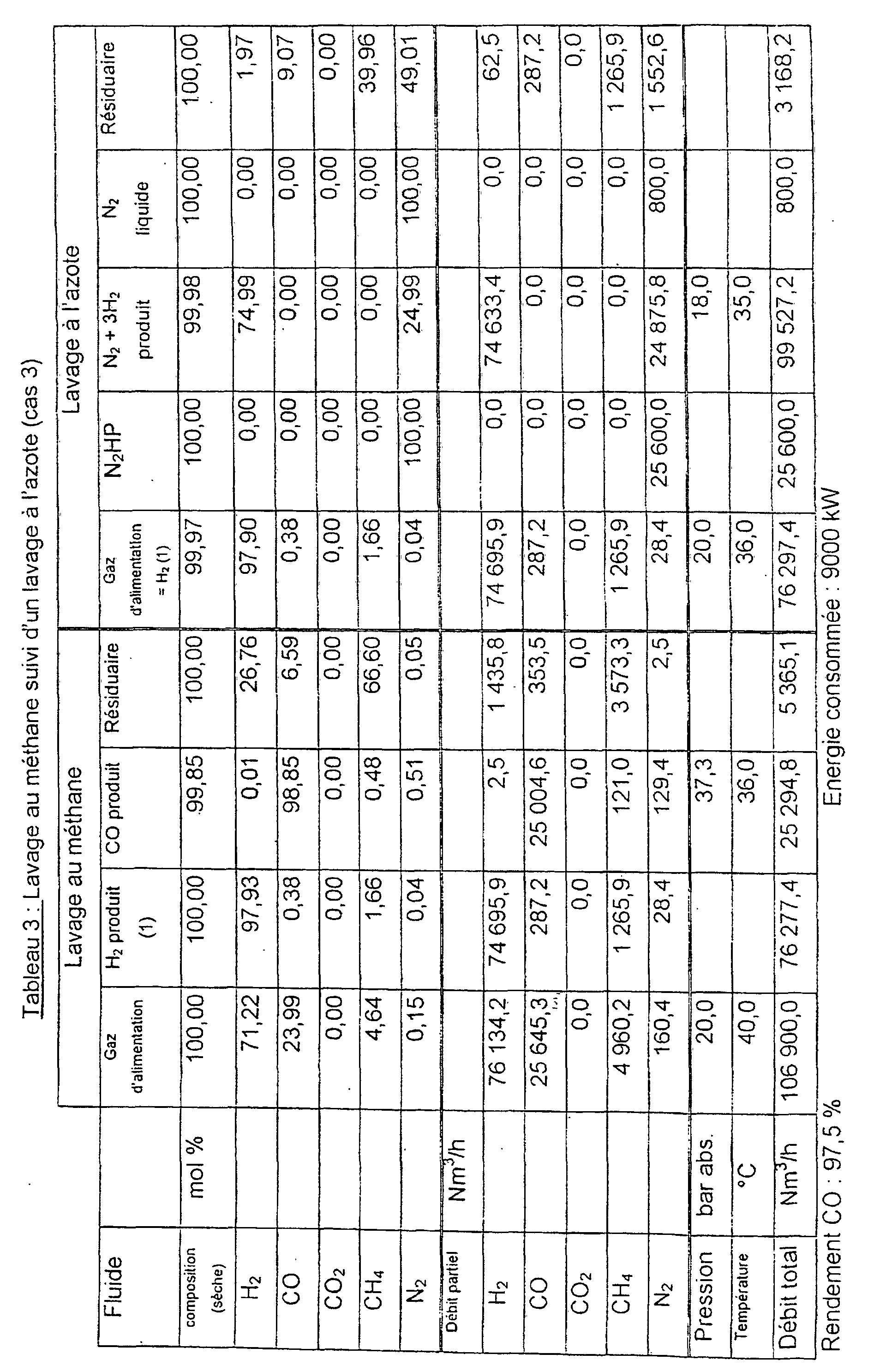

D'après ces tableaux, on voit que :
- le gain d'énergie obtenu avec le schéma du cas 1 par rapport à celui du cas 3 connu est supérieur à 30 % ;
- le gain d'énergie obtenu avec le schéma du cas 2 par rapport à celui du cas 1 est supérieur à 20 %.

Du point de vue du coût d'investissement :
- le gain d'investissement avec le schéma du cas 1 par rapport à celui du cas 3 connu est supérieur à 20 % ;
- le gain d'investissement avec le schéma du cas 2 par rapport à celui du cas 1 est supérieur à 30 %.

Le procédé conforme à l'invention permet de produire du monoxyde de carbone dans deux flux ainsi qu'un mélange de synthèse d'ammoniac.

Les inventeurs ont montré que l'on pouvait valoriser l'hydrogène obtenu lors de la production de monoxyde de carbone à partir d'un mélange gazeux d'alimentation issu d'une étape initiale d'oxydation partielle d'hydrocarbures ou de charbon, ou de réformage à la vapeur.

Ils ont montré en outre, qu'en associant une opération de lavage à l'azote à l'opération de condensation partielle classique pour la production de monoxyde de carbone, on pouvait produire de manière inattendue, un mélange de synthèse d'ammoniac et du monoxyde de carbone de haute pureté (> 99 %) en réduisant sensiblement les coûts d'investissement et d'énergie, sans qu'il soit nécessaire d'optimiser le rendement de la production de monoxyde de carbone par condensation partielle comme l'enseigne la technique antérieure.

## Revendications

1. Procédé pour la production combinée de monoxyde de carbone et d'un gaz de synthèse d'ammoniac à partir d'un mélange gazeux d'alimentation (50) contenant 5 essentiellement de l'hydrogène, du monoxyde de carbone et d'autres constituants dont le méthane, du type comprenant les étapes consistant à :
- soumettre le mélange gazeux d'alimentation (50) à haute pression, à une condensation partielle par passage dans un échangeur de chaleur (310 ; 310C) puis séparation dans un pot séparateur (320 ; 320C) en produisant en tête un flux d'hydrogène impur (321 ; 321C) et en cuve, une fraction condensée (322 ; 322C) riche en monoxyde de carbone ;
- purifier, par voie cryogénique, le monoxyde de carbone à partir de ladite fraction condensée (322 ; 322C) par séparation sous moyenne pression dans une première colonne d'épuisement (330 ; 330C) éliminant en tête l'hydrogène dissous,
- envoyer le flux d'hydrogène impur (321 ; 321C) produit en tête du pot séparateur (320 ; 320C) à une colonne de lavage (350 ; 350C) sans le réchauffer à la température ambiante ;
- purifier, par voie cryogénique, l'hydrogène à partir du flux d'hydrogène impur (321, 321C) par lavage à l'azote dans la colonne de lavage (350 ; 350C) en soutirant une fraction liquide (351 ; 341C) riche en monoxyde de carbone en cuve de ladite colonne de lavage (350 ; 350C) ; et
- produire un mélange de synthèse d'ammoniac (385 ; 385C) par addition d'un appoint d'azote (372 ; 372C) prélevé à partir d'un courant d'azote haute pression (370 ; 370C), à partir du flux d'hydrogène (353 ; 353C) produit en tête de la colonne de lavage (350 ; 350C), les étapes de condensation partielle et de lavage à l'azote étant réalisées dans une même installation (300 ; 300C),
**caractérisé en ce qu'**on soutire une seconde fraction liquide (352 ; 352C) à un emplacement intermédiaire de ladite colonne de lavage (350 ; 350C) et on distille sous basse pression dans une colonne de distillation (340 ; 340C) séparant le méthane en cuve, le mélange de cuve (333 ; 333C) provenant de la séparation dans la colonne d'épuisement (330 ; 330C) ;

2. Procédé selon la revendication 1, **caractérisé en ce que** la fraction (351) riche en monoxyde de carbone recueillie en cuve de la colonne de lavage à l'azote (350) est purifiée, par voie cryogénique, dans une deuxième colonne d'épuisement (360) à basse pression, séparant l'hydrogène dissous en tête de colonne.

3. Procédé selon la revendication 2, **caractérisé en ce qu'**une partie (371) d'un courant d'azote haute pression (370) est utilisé après avoir été partiellement refroidi dans l'échangeur de chaleur (310) pour alimenter le rebouilleur de cuve (365) de la colonne d'épuisement à basse pression (360).

4. Procédé selon l'une quelconque des revendications 1 à 3, **caractérisé en ce que** le mélange d'alimentation (50B) est partiellement condensé dans l'échangeur de chaleur (110B) et séparé dans le pot séparateur (120B) muni de plateaux ou garnissages (124), par lavage au monoxyde de carbone (125), en produisant en tête un flux d'hydrogène impur (121B) pratiquement exempt de méthane.

5. Procédé selon la revendication 4, **caractérisé en ce qu'**une partie (125) du flux de monoxyde de carbone (141B) produit en tête de la colonne de distillation (140B), réchauffé, comprimé et partiellement condensé à travers l'échangeur de chaleur (110B), est prélevée et envoyée en tête du pot séparateur (120B).

6. Procédé selon l'une quelconque des revendications 1 à 5, **caractérisé en ce que** l'hydrogène produit en tête de la colonne de lavage (350 ; 350C) se réchauffe dans l'échangeur de chaleur (310 ; 310C), éventuellement après avoir été mélangé avec l'appoint d'azote (372 ; 372C).

7. Procédé selon l'une quelconque des revendications 1 à 5, **caractérisé en ce que** l'azote haute pression se liquéfie dans l'échangeur de chaleur (310 ; 310C) et est envoyé en tête de la colonne de lavage (350 ; 350C) et éventuellement au débit d'hydrogène produit en tête de la colonne de lavage.

8. Procédé selon la revendication 7, **caractérisé en ce que** la fraction (351 C) riche en monoxyde de carbone recueillie en cuve de la colonne de lavage à l'azote (350C) est purifiée, par voie cryogénique, dans la première colonne d'épuisement (330C) après détente à la moyenne pression et mélangée avec la fraction (322C) recueillie en cuve du pot séparateur (320C) préalablement détendue à ladite moyenne pression.

9. Procédé selon l'une des revendications précédentes, **caractérisé en ce qu'**une partie (336, 346 ; 336C, 346) du monoxyde de carbone produit (341 ; 341C) en tête de la colonne de distillation (140, 140B, 340, 340C) est réchauffé, comprimé à l'aide d'un compresseur de cycle (380, 380C) et utilisé comme fluide de cycle pour alimenter les rebouilleurs de cuve (335, 345 ; 335C, 345C) respectivement de la première colonne d'épuisement (330 ; 330C) et de la colonne de distillation (140, 140B, 340, 340C).

10. Procédé selon la revendication 9, **caractérisé en ce qu'**une partie (376 ; 376C) du monoxyde de carbone comprimé est détendue dans une turbine (375 ; 375C) pour contribuer à la production de froid nécessaire aux étapes de séparation.

11. Installation pour la production combinée de monoxyde de carbone et d'un mélange de synthèse d'ammoniac à partir d'un mélange gazeux d'alimentation (50) contenant essentiellement de l'hydrogène, du monoxyde de carbone et d'autres constituants dont le méthane, du type comprenant :
- un échangeur de chaleur (310 ; 310C) pour condenser partiellement le mélange gazeux d'alimentation (50),
- un pot séparateur (320 ; 320C) pour séparer en tête un flux d'hydrogène impur (121 ; 121B ; 321 ; 321C) à partir du mélange gazeux d'alimentation (50) partiellement condensé,
- une première colonne d'épuisement sous moyenne pression (330 ; 330C) équipée de moyens de rebouillage (335 ; 335C) pour séparer en tête l'hydrogène dissous de la fraction condensée de cuve (322 ; 322C) du pot séparateur (320, 320C), détendue dans des moyens de détente (323 ; 323C),
- une colonne de distillation sous basse pression (340 ; 340C) équipée de moyens de rebouillage (145 ; 145B ; 345 ; 345C) pour séparer en tête un flux riche en monoxyde de carbone (141 ; 141B ; 341 ; 341C) à partir du flux de cuve (133 ; 133B ; 333 ; 333C) de la première colonne d'épuisement, détendu dans des moyens de détente (134 ; 134B ; 334 ; 334C),
- une colonne de lavage à l'azote liquide (360 ; 350C) pour séparer en cuve une fraction (351 ; 351C) riche en monoxyde de carbone et en tête un flux d'hydrogène (353 ; 353C) à partir du flux d'hydrogène impur (321 ; 321C) produit en tête du pot séparateur (320 ; 320C),
- des moyens pour amener le flux d'hydrogène impur (321 ; 321C) de la tête du pot séparateur (320 ; 320C) à la colonne de lavage sans le chauffer à la température ambiante,
- une source adaptée pour fournir un courant d'azote à haute pression (70 ; 70A ; 370 ; 370C), et
- une conduite d'amenée d'un appoint d'azote (372 ; 372C) au flux d'hydrogène (353 ; 353C) produit en tête de la colonne de lavage à l'azote (350 ; 350C) pour fournir le mélange de synthèse d'ammoniac,
**caractérisée en ce que** la colonne de lavage à l'azote (350 ; 350C) est munie de moyens de soutirage intermédiaire d'une fraction liquide (352 ; 352C), **en ce que** l'installation comprend une colonne de distillation sous basse pression (340 ; 340C) équipée de moyens de rebouillage (145 ; 145B ; 345 ; 345C) pour séparer en tête un flux riche en monoxyde de carbone (141 ; 141B ; 341 ; 341C) à partir du flux de cuve (133 ; 133B ; 333 ; 333C) de la première colonne d'épuisement, détendu dans des moyens de détente (134 ; 134B ; 334 ; 334C), et **en ce qu'** une boîte froide unique contient tous les éléments ci-dessus à part la source d'azote.

12. Installation selon la revendication 11, **caractérisée en ce qu'**elle comporte un cycle frigorifique comprenant un compresseur de cycle (380 ; 380C), et utilisant le monoxyde de carbone (341 ; 341C) produit en tête de la colonne de distillation sous basse pression et éventuellement le liquide de cuve de la deuxième colonne d'épuisement suite à une étape de vaporisation (340 ; 340C), pour alimenter les moyens de rebouillage (335 et 345 ; 335C et 345C) de la première colonne d'épuisement (330 ; 330C) et de la colonne de distillation (340 ; 340C).

13. Installation selon l'une des revendications 11 et 12, **caractérisée en ce qu'**elle comprend une seconde colonne d'épuisement (230 ; 360) équipée de moyens de rebouillage (231 ; 365), pour séparer en tête l'hydrogène dissous (232 ; 362) du flux riche en monoxyde de carbone (221A ; 351) issu en cuve de la colonne de lavage à l'azote (220A ; 350).

14. Installation selon la revendication 13, **caractérisée en ce qu'**elle comporte un cycle azote ouvert utilisant l'azote à haute pression (70A ; 370) pour alimenter les moyens de rebouillage (231 ; 365) de la seconde colonne d'épuisement (230 ; 360).

15. Installation selon l'une des revendications 11 à 14, **caractérisée en ce que** le pot séparateur (120B) est équipé de plateaux ou garnissages (124) et de moyens de lavage au monoxyde de carbone (125) pour produire en tête un flux d'hydrogène impur (121B) pratiquement exempt de méthane.

16. Installation selon les revendications 11 et 15 prises ensemble, **caractérisée en ce que** les moyens de lavage au monoxyde de carbone comprennent une conduite pour amener une partie (125) du monoxyde de carbone du cycle frigorifique, en tête du pot séparateur (120B).

17. Installation selon la revendication 16, **caractérisée en ce qu'**elle comprend une conduite d'amenée pour mélanger le liquide de cuve (351C) de la colonne de lavage (350C) avec la fraction condensée de cuve (322C) du pot séparateur (320C), pour alimenter en tête la colonne d'épuisement (330C).

## Claims

1. Process for the combined production of carbon monoxide and an ammonia synthesis gas from a feed gas mixture (50) containing essentially hydrogen, carbon monoxide and other constituents including methane, of the type comprising the steps consisting in:
- subjecting the feed gas mixture (50) at high pressure to partial condensation by passing through a heat exchanger (310:310C) then separation in a separator pot (320:320C), producing an impure hydrogen flow (321:321C) as overhead product, and a condensed fraction (322, 322C) rich in carbon monoxide as bottoms product;
- purifying, cryogenically, the carbon monoxide from the said condensed fraction (322;322C) by separation under medium pressure in a first stripping column (330;330C) removing the dissolved hydrogen as overhead product,
- sending the impure hydrogen flow (321;321C) produced as overhead product of the separator pot (320;320C) to a washing column (350;350C) without heating it to ambient temperature;
- purifying, cryogenically, the hydrogen from the impure hydrogen flow (321,321C) by washing with nitrogen in the washing column (350;350C) while drawing off a liquid fraction (351;341C) rich in carbon monoxide as bottoms product of the said washing column (350;350C); and
- producing an ammonia synthesis mixture (385;385C) by adding a nitrogen supplement (372;372C) taken from a high-pressure nitrogen stream (370;370C), and from the hydrogen flow (353;353C) produced as overhead product of the washing column (350;350C), the steps of partial condensation and washing with nitrogen being carried out in the same plant (300,300C),
**characterized in that** a second liquid fraction (352;352C) is drawn off at an intermediate position of the said washing column (350;350C) and the bottoms mixture (333;333C) resulting from the separation in the stripping column (330;330C) is distilled under low-pressure in a distillation column (340;340C) separating the methane as bottoms product;

2. Process according to Claim 1, **characterized in that** the fraction (351) rich in carbon monoxide collected at the bottom of the nitrogen-washing column (350) is purified, cryogenically, in a low-pressure second stripping column (360), separating the dissolved hydrogen as column overhead.

3. Process according to Claim 2, **characterized in that** a portion (371) of a high-pressure nitrogen stream (370) is used, after having been partially cooled in the heat exchanger (310), to supply the sump reboiler (365) of the low-pressure stripping column (360).

4. Process according to any one of Claims 1 to 3, **characterized in that** the feed mixture (50B) is partially condensed in the heat exchanger (110B) and separated in the separator pot (120B), which is provided with plates or packing (124), by washing with carbon monoxide (125), producing a practically methane-free impure hydrogen flow (121B) as overhead product.

5. Process according to Claim 4, **characterized in that** a portion (125) of the carbon monoxide flow (141B) produced as overhead product of the distillation column (140B), heated, compressed and partially condensed through the heat exchanger (110B), is taken and sent to the top of the separator pot (120B).

6. Process according to any one of Claims 1 to 5, **characterized in that** the hydrogen produced as overhead product of the washing column (350;350C) is heated in the heat exchanger (310;310C), optionally after having been mixed with the nitrogen supplement (372;372C).

7. Process according to any one of Claims 1 to 5, **characterized in that** the high-pressure nitrogen liquefies in the heat exchanger (310;310C) and is sent to the top of the washing column (350;350C) and optionally to the hydrogen output produced as overhead product of the washing column.

8. Process according to Claim 7, **characterized in that** the fraction (351C) rich in carbon monoxide collected as bottoms product of the nitrogen-washing column (350C) is purified, cryogenically, in the first stripping column (330C) after having its pressure reduced to the medium pressure and mixed with the fraction (322C) which is collected as bottoms product of the separator pot (320C) and has its pressure reduced beforehand to the said medium pressure.

9. Process according to any one of the preceding claims, **characterized in that** a portion (336, 346; 336C, 346C) of the carbon monoxide produced (341;341C) as overhead product of the distillation column (140, 140B, 340, 340C) is heated, compressed using a cycle compressor (380, 380C) and used as the cycle fluid to supply the sump reboilers (335, 345; 335C, 345C) respectively of the first stripping column (330, 330C) and of the distillation column (140, 140B, 340, 340C).

10. Process according to Claim 9, **characterized in that** a portion (376; 376C) of the compressed carbon monoxide has its pressure reduced in a turbine (375; 375C) to contribute to the refrigeration needed for the separation steps.

11. Plant for the combined production of carbon monoxide and an ammonia synthesis mixture from a feed gas mixture (50) containing essentially hydrogen, carbon monoxide and other constituents including methane, of the type comprising;
- a heat exchanger (310;310C) for partially condensing the feed gas mixture (50),
- a separator pot (320; 320C) for separating an impure hydrogen flow (121; 121B; 321; 321C) as overhead product from the partially condensed feed gas mixture (50),
- a medium-pressure first stripping column (330; 330C) equipped with reboiling means (335; 335C) for separating the dissolved hydrogen as overhead product from the condensed base fraction (322; 322C) of the separator pot (320; 320C), after the latter has had its pressure reduced in pressure-reducing means (323; 323C),
- a low-pressure distillation column (340; 340C) equipped with reboiling means (145; 145B; 345; 345C) for separating a flow rich in carbon monoxide (141; 141B; 341; 341C) as overhead product from the bottoms flow (133; 133B; 333; 333C) of the first stripping column, after the latter has had its pressure reduced in pressure-reducing means (134; 134B; 334; 334C),
- a liquid-nitrogen washing column (350; 350C) for separating a fraction (351; 351C) rich in carbon monoxide as bottoms product and a hydrogen flow (353; 353C) as overhead product from the impure hydrogen flow (321; 321C) produced as overhead product of the separator pot (320; 320C),
- means for conveying the impure hydrogen flow (321; 321C) from the separator pot (320; 320C) of the top to the washing column without heating it to ambient temperature,
- a source designed to provide a stream of nitrogen at high pressure (70; 70A; 370; 370C),
- a line for feeding a nitrogen supplement (372; 372C) to the hydrogen flow (353; 353C) produced as overhead product of the nitrogen-washing column (350; 350C) in order to provide the ammonia synthesis mixture,
**characterized in that** the nitrogen-washing column (350; 350C) is provided with means for intermediate withdrawal of a liquid fraction (352; 352C), **in that** the plant comprises a low-pressure distillation column (340; 340C) equipped with reboiling means (145; 145B; 345; 345C) for separating a flow rich in carbon monoxide (141; 141B; 341; 341C) as overhead product from the bottoms flow (133; 133B; 333; 333C) of the first stripping column, after the latter has had its pressure reduced in pressure-reducing means (134; 134B; 334; 334C), and **in that** a single cold box contains all the elements above apart from the nitrogen source.

12. Plant according to Claim 11, **characterized in that** it includes a cooling cycle which comprises a cycle compressor (380; 380C) and uses the carbon monoxide (341; 341C) produced as overhead product of the distillation column under low pressure, and optionally the bottoms liquid from the second stripping column following a vaporization step (340; 340C), to supply the reboiling means (335 and 345; 335C and 345) of the first stripping column (330; 330C) and of the distillation column (340; 340C).

13. Plant according to either of Claims 11 and 12, **characterized in that** it comprises a second stripping column (230; 360), equipped with reboiling means (231; 365), for separating the dissolved hydrogen (232; 362) as overhead product from the flow rich in carbon monoxide (221A; 351) output as bottoms product of the nitrogen-washing column (220A; 350).

14. Plant according to Claim 13, **characterized in that** it includes an open nitrogen cycle using nitrogen at high pressure (70A; 370) to supply the reboiling means (231; 365) of the second stripping column (230; 360).

15. Plant according to any one of Claims 11 to 14, **characterized in that** the separator pot (120B) is equipped with plates or packing (124) and means for washing with carbon monoxide (125) in order to produce a practically methane-free impure hydrogen flow (121B) as tops product.

16. Plant according to Claims 11 and 15 taken together, **characterized in that** the means for washing with carbon monoxide comprise a line for feeding a portion (125) of the carbon monoxide from the cooling cycle to the top of a separator pot (120B).

17. Plant according to Claim 16, characterized n that it comprises a feed line for mixing the bottoms liquid (351C) of the washing column (350C) with the condensed bottoms fraction (322C) of the separator pot (320C), in order to supply the stripping column (330C) at the top.

## Patentansprüche

1. Verfahren zur kombinierten Herstellung von Kohlenmonoxid und Ammoniaksynthesegas aus einem Einsatzgasgemisch (50), das im wesentlichen Waserstoff, Kohlenmonoxid und andere Bestandteile einschließlich Methan enthält, bei dem man:
- das Einsatzgasgemisch (50) unter hohem Druck einer Teilkondensation unterwirft, indem man es durch einen Wärmetauscher (310; 310C) leitet und dann in einem Separator (320; 320C) in einen Kopfstrom von unreinem Wasserstoff (321; 321C) und eine kohlenmonoxidreiche kondensierte Sumpffraktion (322; 322C) zerlegt;
- das Kohlenmonoxid aus der kondensierten Fraktion (322; 322C) auf kryogenem Wege reinigt, indem man in einer ersten Abtriebssäule (330; 330C) eine Mitteldruck-Trennung durchführt, wobei der gelöste Wasserstoff am Kopf entfernt wird,
- den am Kopf des Separators (320; 320C) anfallenden Strom von unreinem Wasserstoff (321; 321C) einer Waschsäule (350; 350C) zuführt, ohne ihn auf Umgebungstemperatur zu erwärmen;
- den Wasserstoff aus dem Strom von unreinem Wasserstoff (321; 321C) in der Waschsäule (350; 350C) durch Waschen mit Stickstoff auf kryogenem Wege reinigt, wobei man aus dem Sumpf der Waschsäule (350; 350C) eine kohlenmonoxidreiche flüssige Fraktion (351; 341C) abzieht; und
- aus dem am Kopf der Waschsäule (350; 350C) anfallenden Wasserstoffstrom (353; 353C) durch Zugabe eines Stickstoffzusatzes (372; 372C) aus einem Hochdruck-Stickstoffstrom (370; 370C) ein Ammoniaksynthesegemisch (385; 385C) herstellt, wobei man die Teilkondensation und die Stickstoffwäsche in derselben Vorrichtung (300; 300C) durchführt,
**dadurch gekennzeichnet, daß** man an einer Zwischenstelle der Waschsäule (350; 350C) eine zweite flüssige Fraktion (352; 352C) abzieht und das Sumpfgemisch (333; 333C) aus der Zerlegung in der Abtriebssäule (330; 330C) unter niedrigem Druck in einer Destillationssäule (340; 340C) unter Abtrennung von Methan im Sumpf destilliert.

2. Verfahren nach Anspruch 1, **dadurch gekennzeichnet, daß** man die im Sumpf der Stickstoffwaschsäule (350) aufgefangene kohlenmonoxidreiche Fraktion (351) in einer zweiten Abtriebssäule (360) bei niedrigem Druck auf kryogenem Wege reinigt, wobei der gelöste Wasserstoff am Säulenkopf abgetrennt wird.

3. Verfahren nach Anspruch 2, **dadurch gekennzeichnet, daß** man einen Teil (371) eines Hochdruck-Stickstoffstroms (370) nach teilweiser Abkühlung im Wärmetauscher (310) zur Versorgung des Sumpfverdampfers (365) der Niederdruck-Abtriebssäule (360) verwendet.

4. Verfahren nach einem der Ansprüche 1 bis 3, **dadurch gekennzeichnet, daß** man das Einsatzgemisch (50B) im Wärmetauscher (110B) teilweise kondensiert und in dem mit Böden oder einer Packung (124) ausgestatteten Separator (120B) durch Waschen mit Kohlenmonoxid (125) zerlegt, wobei am Kopf ein Strom von unreinem Wasserstoff (121B) anfällt, der praktisch methanfrei ist.

5. Verfahren nach Anspruch 4, **dadurch gekennzeichnet, daß** man einen Teil (125) des am Kopf der Destillationssäule (140B) anfallenden Kohlenmonoxidstroms (141B) nach Anwärmen, Verdichten und teilweisem Kondensieren mittels Wärmetauscher (110B) entnimmt und dem Kopf des Separators (120B) zuführt.

6. Verfahren nach einem der Ansprüche 1 bis 5, **dadurch gekennzeichnet, daß** man den am Kopf der Waschsäule (350; 350C) anfallenden Wasserstoff im Wärmetauscher (310; 310C) anwärmt, gegebenenfalls nach Mischen mit dem Stickstoffzusatz (372; 372C).

7. Verfahren nach einem der Ansprüche 1 bis 5, **dadurch gekennzeichnet, daß** man den Hochdruck-Stickstoff im Wärmetauscher (310; 310C) verflüssigt und dem Kopf der Waschsäule (350; 350C) und gegebenenfalls dem am Kopf der Waschsäule anfallenden Wasserstoffstrom zuführt.

8. Verfahren nach Anspruch 7, **dadurch gekennzeichnet, daß** man die im Sumpf der Stickstoffwaschsäule (350C) aufgefangene kohlenmonoxidreiche Fraktion (351C) nach Enstpannung auf den mittleren Druck in einer ersten Abtriebssäule (330C) auf kryogenem Wege reinigt und mit der im Sumpf des Separators (320C) aufgefangenen und vorher auf den mittleren Druck entspannten Fraktion (322C) mischt.

9. Verfahren nach einem der vorhergehenden Ansprüche, **dadurch gekennzeichnet, daß** man einen Teil (336, 346; 336C, 346) des am Kopf der Destillationssäule (140, 140B, 340, 340C) anfallenden Kohlenmonoxids (341; 341C) anwärmt, mit Hilfe eines Kreislaufverdichters (380, 380C) verdichtet und als Kreislauffluid zur Versorgung der Sumpfverdampfer (335, 345; 335C, 345C) der ersten Abtriebssäule (330; 330C) und der Destillationssäule (140, 140B, 340, 340C) verwendet.

10. Verfahren nach Anspruch 9, **dadurch gekennzeichnet, daß** man einen Teil (376; 376C) des verdichteten Kohlenmonoxids in einer Turbine (375; 375C) entspannt und dadurch zur Erzeugung der für die Trennschritte benötigten Kälte beiträgt.

11. Vorrichtung zur kombinierten Herstellung von Kohlenmonoxid und Ammoniaksynthesegemisch aus einem Einsatzgasgemisch (50), das im wesentlichen Wasserstoff, Kohlenmonoxid und andere Bestandteile einschließlich Methan enthält, enthaltend:
- einen Wärmetauscher (310; 310C) zum teilweisen Kondensieren des Einsatzgasgemischs (50),
- einen Separator (320; 320C) zur Kopfabtrennung eines Stroms von unreinem Wasserstoff (121; 121B; 321; 321C) aus einem teilweise kondensierten Einsatzgasgemisch (50),
- eine mit Verdampfungseinrichtungen (335; 335C) ausgestattete erste Mitteldruck-Abtriebssäule (330; 330C) zur Kopfabtrennung des gelösten Wasserstoffs aus der in Entspannungseinrichtungen (323; 323C) entspannten kondensierten Sumpffraktion (322; 322C) des Separators (320; 320C),
- eine mit Verdampfungseinrichtungen (145; 145B; 345; 345C) ausgestattete NiederdruckDestillationssäule (340; 340C) zur Kopfabtrennung eines kohlenmonoxidreichen Stroms (141; 141B; 341; 341C) aus dem in Entspannungseinrichtungen (134; 134B; 334; 334C) entspannten Sumpfstrom (133; 133B; 333; 333C) der ersten Abtriebssäule,
- eine Flüssigstickstoffwaschsäule (360; 350C) zur Zerlegung des am Kopf des Separators (320; 320C) anfallenden Stroms von unreinem Wasserstoff (321; 321C) in eine kohlenmonoxidreiche Sumpffraktion (351; 351C) und einen Wasserstoffkopfstrom (353; 353C),
- Einrichtungen zum Zuführen des Stroms von unreinem Wasserstoff (321; 321C) vom Kopf des Separators (320; 320C) zur Waschsäule, ohne ihn auf Umgebungstemperatur zu erwärmen,
- eine auf die Lieferung eines Hochdruckstickstoffstroms (70; 70A; 370; 370C) ausgelegte Quelle und
- eine Leitung zum Zuführen eines Stickstoffzusatzes (372; 372C) zu dem am Kopf der Stickstoffwaschsäule (350; 350C) anfallenden Wasserstoffstrom (353; 353C) zur Bereitstellung eines Ammoniaksynthesegemischs,
**dadurch gekennzeichnet, daß** die Stickstoffwaschsäule (350; 350C) mit Einrichtungen zum Zwischenabzug einer flüssigen Fraktion (352; 352C) ausgestattet ist und
die Vorrichtung eine mit Verdampfungseinrichtungen (145; 145B; 345; 345C) ausgestattete Niederdruck-Destillationssäule (340; 340C) zur Kopfabtrennung eines kohlenmonoxidreichen Stroms (141; 141B; 341; 341C) aus dem in Entspannungseinrichtungen (134; 134B; 334; 334C) entspannten Sumpfstrom (133; 133B; 333; 333C) der ersten Abtriebssäule enthält und
alle obigen Elemente außer der Stickstoffquelle in einer einzigen Cold-Box enthalten sind.

12. Vorrichtung nach Anspruch 11, **dadurch gekennzeichnet, daß** sie einen Kältekreislauf enthält, der einen Kreislaufverdichter (380; 380C) enthält und bei dem das am Kopf der Destillationssäule unter niedrigem Druck anfallende Kohlenmonoxid (341; 341C) und gegebenenfalls die Sumpfflüssigkeit der zweiten Abtriebssäule nach einem Verdampfungsschritt (340; 340C) zur Versorgung der Verdampfungsmittel (335 und 345; 335C und 345C) der ersten Abtriebssäule (330; 330C) und der Destillationssäule (340; 340C) verwendet wird.

13. Vorrichtung nach Anspruch 11 oder 12, **dadurch gekennzeichnet, daß** sie eine mit Verdampfungseinrichtungen (231; 365) ausgestattete zweite Abtriebssäule (230; 360) zur Kopfabtrennung des gelösten Wasserstoffs (232; 362) aus dem kohlenmonoxidreichen Strom (221A; 351) aus dem Sumpf der Stickstoffwaschsäule (220A; 350) enthält.

14. Vorrichtung nach Anspruch 13, **dadurch gekennzeichnet, daß** sie einen offenen Stickstoffkreislauf enthält, bei dem die Verdampungseinrichtungen (231; 365) der zweiten Abtriebssäule (230; 360) mit Hochdruck-Stickstoff versorgt werden.

15. Vorrichtung nach einem der Ansprüche 11 bis 14, **dadurch gekennzeichnet, daß** der Separator (120B) mit Böden oder einer Packung (124) und Kohlenmonoxidwascheinrichtungen (125) zur Erzeugung eines Kopfstroms von unreinem Stickstoff (121B), der praktisch methanfrei ist, ausgestattet ist.

16. Vorrichtung nach den Ansprüchen 11 und 15, **dadurch gekennzeichnet, daß** die Kohlenmonoxidwascheinrichtungen eine Leitung zum Zuführen eines Teils (125) des Kohlenmonoxids vom Kältekreislauf zum Kopf des Separators (120B) enthalten.

17. Vorrichtung nach Anspruch 16, **dadurch gekennzeichnet, daß** sie eine Zuführungsleitung zum Mischen der Sumpfflüssigkeit (351) der Waschsäule (350C) mit der kondensierten Sumpffraktion (322C) des Separatos (320C) zur Kopfversorgung der Abstriebssäule (330C) enthält.
